# FASCICULE DE BREVET EUROPEEN

(11) **EP 4 147 106 B1**
(45) Date de publication et mention de la délivrance du brevet: **04.09.2024**
(21) Numéro de dépôt: 21721957.5
(22) Date de dépôt: 03.05.2021
(51) Int. Cl.: G05D 1/00

(54) **PROCÉDÉ DE CONTRÔLE D'UN ROBOT-AÉRONEF ET SYSTÈME DE CONTRÔLE CORRESPONDANT**
VERFAHREN ZUR STEUERUNG EINES ROBOTER-FLUGZEUGS UND ENTSPRECHENDES STEUERUNGSSYSTEM
METHOD FOR CONTROLLING A ROBOT-AIRCRAFT AND CORRESPONDING CONTROL SYSTEM

(30) Priorité: 05.05.2020 FR 2004418
(43) Date de publication de la demande: 15.03.2023
(73) Titulaire: THALES, 92400 Courbevoie (FR)
(72) Inventeur: LALUQUE, Laurent, 33700 MERIGNAC (FR); LISSAJOUX, Sylvain, 31036 TOULOUSE CEDEX 1 (FR); GOUHIER, Patrick, 31036 TOULOUSE CEDEX 1 (FR); CAPELLE, Bruno, 33700 MERIGNAC (FR)
(74) Mandataire: Lavoix
(86) Numéro de dépôt international: PCT/EP2021/061576
(87) Numéro de publication internationale: WO 2021/224185

(56) Documents cités:
- PHAN DUNG ET AL: "A Component-Based Simplex Architecture for High-Assurance Cyber-Physical Systems", 2017 17TH INTERNATIONAL CONFERENCE ON APPLICATION OF CONCURRENCY TO SYSTEM DESIGN (ACSD), IEEE, 25 June 2017 (2017-06-25), pages 49 - 58, XP033253415, DOI: 10.1109/ACSD.2017.23
- SCHIERMAN JOHN ET AL: "The Introduction of Software Runtime Protection for Autonomous Aerospace Systems", AIAA INFORMATION SYSTEMS - AIAA INFOTECHAEROSPACE 2017 : GRAPEVINE, TEXAS, USA, 9-13 JANUARY 2017 : HELD AT THE AIAA SCITECH FORUM 2017, vol. 1, 5 January 2017 (2017-01-05) - 13 January 2017 (2017-01-13), US, pages 150 - 174, XP055802515, ISBN: 978-1-62410-449-7, Retrieved from the Internet <URL:https://doi.org/10.2514/6.2017-0560> DOI: 10.2514/6.2017-0560
- DESAI ANKUSH ET AL: "SOTER: A Runtime Assurance Framework for Programming Safe Robotics Systems", 2019 49TH ANNUAL IEEE/IFIP INTERNATIONAL CONFERENCE ON DEPENDABLE SYSTEMS AND NETWORKS (DSN), IEEE, 24 June 2019 (2019-06-24), pages 138 - 150, XP033601104, DOI: 10.1109/DSN.2019.00027
- VIVEKANANDAN PRASANTH ET AL: "A Simplex Architecture for Intelligent and Safe Unmanned Aerial Vehicles", 2016 IEEE 22ND INTERNATIONAL CONFERENCE ON EMBEDDED AND REAL-TIME COMPUTING SYSTEMS AND APPLICATIONS (RTCSA), IEEE, 17 August 2016 (2016-08-17), pages 69 - 75, XP032973505, DOI: 10.1109/RTCSA.2016.17
- LUI SHA: "Using simplicity to control complexity", IEEE SOFTWARE., vol. 18, no. 4, 1 July 2001 (2001-07-01), US, pages 20 - 28, XP055776948, ISSN: 0740-7459, DOI: 10.1109/MS.2001.936213

## Description

La présente invention concerne le domaine du contrôle des véhicules autonomes, c'est-à-dire sans pilote humain. Le domaine d'application est celui notamment des aéronefs autonomes, i.e. sans aucune intervention de l'humain pour le contrôler pendant l'opération : robot-avions, robot-drones, robot-hélicoptères...

On connait des articles Desai Ankush et al : « SOTER : A Runtime Assurance Framework For Programming Safe Robotics Systems » et Vivekanandan Prasanth et al : « A Simplex Architecture For Intelligent And Safe Unmanned Aerial Vehicles », des procédés de contrôle de robot aéronef piloté par un système de contrôle autonome, ces procédés comprenant une structure de commande de type SIMPLEX, incluant la surveillance d'un ensemble d'états liés à l'aéronef.

Ce contrôle a pour but de garantir la sûreté de vol d'un aéronef. Par sûreté de vol, on entend la probabilité, que l'on garantit, qu'un événement (e.g. accident, incident, défaillances, etc...) amène à la mort ou la blessure de personnes humaines à bord de l'aéronef ou au sol. Dans l'aéronautique cette probabilité est traditionnellement associée à un niveau de risque :

| **Niveau de risque** | **Classification des effets d'un accident** |
|---|---|
| Catastrophique | Perte de l'avion et/ou morts |
| Risqué (Hazardous) | Réduction des marges de sécurité |
| | Détresse physique ou charge équipage trop importantes |
| | Blessures sévères ou morts de quelques occupants |
| | Réduction significative des marges de sécurité |
| Majeur (Major) | Diminution de la capacité de l'équipe à faire face à des conditions opérationnelles difficiles |
| | Blessures sévères ou morts de quelques occupants |
| Mineur (Minor) | Faible réduction des marges de sécurité |
| | Charge équipe légèrement augmentée (changement de routines) |
| | Effets physiques mais pas de blessures des occupants |

Les méthodes employées aujourd'hui dans le domaine des robots-aéronefs sont des vols supervisés par un opérateur avec automatisation de tâches de l'aéronef, ou bien sont basées sur des mécanismes dont la sûreté n'est aujourd'hui ni garantie, ni reconnue, utilisant par exemple de l'intelligence artificielle, par exemple de type machine learning.

A cet effet, suivant un premier aspect, l'invention propose un procédé de contrôle d'un robot-aéronef selon la revendication 1.

L'invention permet ainsi de garantir la sûreté de vol d'un aéronef sans intervention d'un humain et propose une solution complètement autonome (i.e. automatique et sans supervision par l'humain) de contrôle permettant de garantir que ledit aéronef reste dans une enveloppe d'états sûrs, en considérant le vecteur d'état.

Dans des modes de réalisation, le procédé de contrôle d'un robot-aéronef est selon l'une quelconque des revendications 2 à 6.

Suivant un deuxième aspect, la présente invention propose un système de contrôle selon la revendication 7.

Dans des modes de réalisation du système de contrôle est selon l'une quelconque des revendications 8 à 10.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue schématique d'un hélicoptère-robot dans un mode de réalisation de l'invention ;
[Fig 2] la figure 2 est une vue schématique illustrant le mode de fonctionnement simplex dans un mode de réalisation de l'invention ;
[Fig 3] la figure 3 est un diagramme d'états dans un mode de réalisation de l'invention ;
[Fig 4] la figure 4 représente les étapes d'un procédé de contrôle de pilotage dans un mode de réalisation de l'invention ;

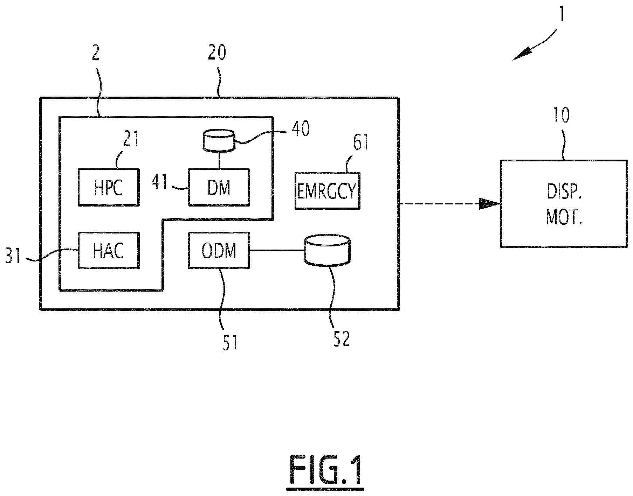

La figure 1 représente un robot-aéronef 1, encore appelé aéronef autonome 1, ici un robot-hélicoptère, c'est-à-dire un hélicoptère sans pilote et en outre non opéré à distance par un opérateur humain.

Le robot-hélicoptère 1 comprend, entre autres, un système de contrôle de pilotage 20 et un ensemble d'équipements, désignés ici globalement par l'appellation globale « dispositif de contrôles et d'actionneurs » 10.

Le dispositif de contrôles et d'actionneurs 10 comprend l'ensemble des équipements du robot-hélicoptère 1 créant le déplacement du robot-hélicoptère : les moteurs, les pales, les parties mobiles du robot-hélicoptère influant sur sa dynamique, son altitude, son orientation, sa vitesse, son accélération. Le dispositif de contrôles et d'actionneurs 10 inclut au moins les équipements de mise en oeuvre des commandes de vol (plateforme temps réel de calcul électronique). Selon les aéronefs, il pourra aussi inclure une partie ou la totalité des actionneurs (mécanique ou électriques) permettant par exemple de déplacer les gouvernes aérodynamiques, des contrôleurs moteurs (ex : contrôle de la puissance délivrée, des vitesses de rotation ou du pas des hélices) ou encore tout organe de contrôle spécifique au porteur, ainsi que tout dispositif d'asservissement électronique.

Le système de contrôle de pilotage 20 est adapté pour déterminer automatiquement des commandes de pilotage et les fournir au dispositif de contrôles et d'actionneurs 10 qui les exécute ensuite : ces commandes comprennent donc les commandes de vol (i.e. de vitesse, d'altitude, d'attitude), ainsi que d'un cap...

Le système de contrôle de pilotage 20 comprend un module de pilotage simplex 2, un module de basculement de modes 51, libellé module ODM 51 et un module d'urgence, nommé module EMRGCY 61.

Le module de contrôle de pilotage simplex 2 est un module de détermination de commandes de pilotage destinées au dispositif moteur 10. Le module de pilotage simplex 2 est doté d'une architecture de type simplex. Cette architecture, utilisée dans les systèmes critiques pour calculer les commandes du système est décrite par exemple dans le document « Using Simplicity to Control Complexity », Lui Sha et al, 2001. L'architecture simplex permet de garder le système contrôlé dans une enveloppe sûre.

Le module de pilotage simplex 2 comprend ainsi :
- un contrôleur de pilotage « haute performance » 21, nommé aussi HPC 21 ;
- un contrôleur de pilotage « haute sécurité » 31, nommé aussi HAC 31 ;
- un module de décision 41, nommé aussi DM 41.

Chacun des contrôleurs de pilotage HPC 21 et HAC 31 est adapté pour, en parallèle l'un de l'autre, déterminer des commandes de pilotage du dispositif de contrôles et d'actionneurs 10, en fonction de données qui leur sont fournies par un ensemble de capteurs et en fonction d'une mission à réaliser par l'aéronef autonome 1 (par exemple un itinéraire à suivre, une prise de vue à effectuer, un transport de charge, une inspection visuelle, une prise en chasse d'une voiture ).

L'ensemble de capteurs comprend selon les modes de réalisation un ou des capteurs parmi des capteurs :
- adaptés pour percevoir l'environnement extérieur, tel qu'un dispositif de télédétection par laser, plus connu sous le nom de lidar (de l'anglais *light détection and ranging*) ; un radar (de l'anglais *radio détection and ranging*) ; un laser (de l'anglais *light amplification by stimulated émission of radiation*) ; un télémètre ; un radioaltimètre ; ou tout autre dispositif de vision telle qu'une ou plusieurs caméras stéréoscopiques ; et/ou
- adaptés pour estimer les caractéristiques physiques de l'aéronef autonome 1 (position, vitesse, accélération et attitudes), tels qu'un accéléromètre ; une centrale inertielle, également appelée IMU (de l'anglais *Inertial Measurement Unit*) *;* un capteur à effet Doppler ; un capteur de positionnement par satellites, tel qu'un capteur GPS (de l'anglais *Global Positioning System*)*,* un capteur Galileo, un capteur Glonass ; et/ou
- adaptés pour percevoir la masse d'air dans laquelle l'aéronef autonome 1 évolue, telle que des sondes d'incidence, des capteurs de pressions (Air data Unit) ou un radar météo.

Ces capteurs sont embarqués à bord du aéronef autonome 1 ou à l'extérieur de ce dernier.

Le contrôleur HAC 31 peut aussi utiliser en entrée les commandes déterminées par le contrôleur HPC 21.

Typiquement le HPC 21 est adapté pour réaliser la fonction de calcul des commandes à partir d'entrées, le tout avec un objectif de performance - avec technologie performante tels que les réseaux de neurones ou les algorithmes évolutionnaires, tandis que le HAC 31 est adapté pour réaliser cette même fonction de calcul des commandes à partir d'entrées, avec des objectifs de sûreté, le HAC 31 ayant, dans un mode de réalisation, été certifié quant à la sûreté de vol (conçu et certifié pour atteindre ses objectifs avec un niveau de sûreté standard). Le HAC 31 peut aussi réaliser une fonction plus simple que le HPC 21 permettant seulement de protéger l'aéronef.

Dans son calcul de commandes pour réaliser la mission, par exemple le suivi d'un itinéraire prédéfini, le HPC 21 prend en compte le confort des passagers, la minimisation de la consommation de carburant etc., tandis que le HAC 31 veille à éviter les obstacles et les pertes de contrôle, sans prise en compte des aspects carburant, ni confort.

A l'aéronef autonome 1 est associé un vecteur d'état, comprenant des paramètres, dans le plan vertical et/ou le plan longitudinal et/ou le plan latéral, dont la valeur caractérise l'état courant de l'aéronef 1 et/ou son évolution dans chacun de ces plans.

Dans le plan longitudinal, les paramètres du vecteur d'état pourront être la position de l'aéronef autonome 1, sa vitesse longitudinale (de type Calibrated AirSpeed, True AirSpeed, Mach, lAS, Ground Speed ...), et/ou son accélération longitudinale...

Dans le plan latéral, les paramètres du vecteur d'état pourront être la vitesse latérale de l'aéronef autonome 1, son accélération latérale, le facteur de charge latéral, et/ou les attitudes de l'aéronef 1 dans ce plan (roulis, lacet, dérapage, cap, route) ...

Dans le plan vertical, les paramètres du vecteur d'état pourront être l'altitude de l'aéronef autonome 1, sa vitesse verticale, son accélération verticale, le facteur de charge vertical, et/ou les attitudes de l'aéronef 1 dans ce plan (tangage, incidence, assiette verticale) ...

Optionnellement une hauteur sol, ou plus généralement un couple distance/direction à l'obstacle le plus proche complète ce vecteur d'état.

Le module de pilotage simplex 2 est en outre associé à un ensemble d'états sûrs prédéfinis 40. Cet ensemble d'états sûrs prédéfinis comprend la définition d'un ou de plusieurs états sûrs, chaque état sûr étant représenté par un vecteur d'état dont les paramètres prennent des valeurs respectives prédéfinies, comprises dans un domaine de valeurs respectives prédéfinies dans chaque plan considéré parmi les plans vertical, latéral, longitudinal.

Le domaine de valeurs prédéfinies est par exemple construit en regard de la mission : par exemple, concernant les attitudes, on pourra limiter la valeur du cap à un écart de quelques degrés (par exemple un écart d'une valeur fixée, inférieure ou égale à 10°) avec un cap théorique que devrait alors avoir le robot-aéronef autonome1 d'après sa mission.

Le module de décision 41, nommé aussi DM 41 est adapté pour déterminer l'état courant du robot-aéronef 1, défini par le vecteur d'état courant, i.e. par exemple par la vitesse courante, l'accélération courante et la différence de cap courante dans chaque plan considéré. Le DM 41 est adapté pour comparer l'état courant du robot-aéronef à l'ensemble d'état sûrs 41 et ainsi pour déterminer, en fonction de la comparaison, si l'état courant fait partie ou non des états sûrs (ie si le vecteur d'état courant est égal à l'un des vecteurs d'état sûrs).

Le DM 41 est adapté pour, dans le cas où l'état courant ne fait pas partie des états sûrs, choisir les commandes courantes de pilotage fournies par le contrôleur HAC 31 parmi les commandes courantes de pilotage fournies par le contrôleur HPC 21 et le contrôleur HAC 31, et pour délivrer lesdites commandes choisies en sortie du module de contrôle de pilotage simplex 2.

Le DM 41 est adapté pour, dans le cas où l'état courant fait partie des états sûrs, choisir les commandes courantes de pilotage fournies par le contrôleur HPC 21 parmi les commandes courantes de pilotage fournies par le contrôleur HPC 21 et le contrôleur HAC 31, et pour délivrer lesdites commandes choisies en sortie du module de contrôle de pilotage simplex 2.

Pour ce faire, dans un mode de réalisation en référence à la figure 1, le module de contrôle de pilotage simplex 2 comprend un commutateur 9 et le DM 41 est adapté pour piloter le commutateur 9 pour mettre en liaison le HPC 21 lorsqu'un état sûr a été déterminé et alternativement pour mettre en liaison le HAC 21 lorsqu'un état non sûr a été déterminé.

Dans un mode de réalisation, le module de contrôle de pilotage simplex 2 met en outre en oeuvre une méthode contrôle adaptatif tel que le L1 simplex, qui permet de détecter que le modèle de contrôle de l'aéronef est en train de changer, ce qui est par exemple le cas lors d'une défaillance (ex : une panne moteur), ou lors de phénomènes aérologies extrêmes (ex : turbulences engendrant un décrochage ou windshear).

Le module de pilotage simplex 2 permet ainsi, dès que le robot-aéronef n'est plus dans un état sûr tel que prédéfini, de redonner le pilotage au contrôleur HAC 31 de sûreté supérieure, jusqu'à ce que ce dernier ait ré-établi le robot-aéronef 1 dans un état sûr.

Le module de basculement de modes 51, dit encore module ODM 51, est adapté pour surveiller un ensemble de conditions 52, dit ensemble de conditions de fonctionnement nominal 52, et pour détecter dès que cet ensemble de conditions nominales n'est plus vérifié.

Le module ODM 51 est adapté pour, tant qu'il détecte que l'ensemble de conditions de fonctionnement nominal 52 est rempli, permettre la fourniture au dispositif de contrôles et d'actionneurs 10, des commandes courantes déterminées par le module de pilotage automatique simplex 2 et destinées au dispositif de contrôles et d'actionneurs 10 : il s'agit du mode de fonctionnement nominal du système de contrôle de pilotage 20. Le module ODM 51 est adapté pour, dès détection que l'ensemble de conditions de fonctionnement nominal 52 n'est plus rempli, empêcher la fourniture, au dispositif de contrôles et d'actionneurs 10, des commandes courantes déterminées par le module de pilotage simplex 2, et pour commander au module d'urgence EMRGCY 61 la mise en oeuvre d'une procédure d'urgence, donnant lieu à des commandes d'urgence qui sont alors fournies au dispositif de contrôles et d'actionneurs 10 : il s'agit du mode de fonctionnement d'urgence du système de contrôle de pilotage 20.

Dans le mode de réalisation considéré, l'ensemble de conditions de fonctionnement nominal 52 est défini par un ou plusieurs des paramètres suivants :
- conditions -extérieures à l'aéronef 1- de vol courantes garantissant un bon fonctionnement des capteurs : par exemple plage de températures extérieures, vitesse du vent et direction du vent, luminance, visibilité (RVR), pluie ;
- disponibilité de données relatives à la zone courante survolée (bases de donnée de terrain, obstacles, zones de poser) ;
- présence d'au moins une zone de poser prédéfinie à moins de x NM (NM pour l'unité de Mile Nautique, de l'anglais « Nautic Mile »), x est par exemple dans la plage [1, 10] ;
- état de bon fonctionnement (selon des critères prédéfinis) des équipements du aéronef autonome 1, notamment du dispositif de contrôles et d'actionneurs 10 et notamment du module de pilotage simplex 2 ; absence de pannes matérielles graves, i.e. qui ont un impact sur la mission ;
- valeurs courantes de la vitesse et/ou de l'altitude etc. dans des plages de valeurs respectives prédéfinies par le manuel avion et les limitations des capteurs.

Le dispositif de contrôles et d'actionneurs 10 est adapté pour exécuter les commandes qui lui sont fournies en entrée : ainsi sous l'arbitrage du module ODM 51, le dispositif de contrôles et d'actionneurs 10 est adapté pour exécuter les commandes fournies par le module de pilotage simplex 2 en mode de fonctionnement nominal et pour exécuter les commandes d'urgence en mode d'urgence.

Le module d'urgence EMRGCY 61 est adapté, dans le mode de fonctionnement d'urgence, pour fournir des commandes d'urgence au dispositif de contrôles et d'actionneurs 10 permettant de placer le robot-aéronef dans un état de risque minimum : ces commandes d'urgence comprennent par exemple une commande d'atterrissage immédiat, ou une commande d'atterrissage sur la zone d'urgence la plus proche parmi une liste prédéfinie de zones d'urgence, ou par exemple, lorsque l'aéronef est un hélicoptère, une manoeuvre d'autorotation en cas de panne moteur

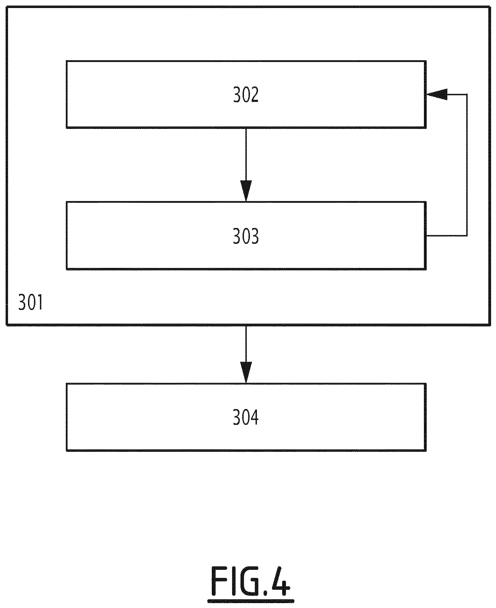

Les étapes d'un procédé 300 de contrôle de pilotage d'un aéronef autonome 1 dans un mode de mise en oeuvre de l'invention sont maintenant décrites en référence à la figure 4. Ces étapes décrivent la détermination automatique des commandes de pilotage par le système de contrôle de pilotage 20, en fonction du contexte et la fourniture de celles des commandes devant alors s'appliquer selon l'état (sûr/non sûr et selon le mode de fonctionnement nominal ou mode d'urgence) au dispositif de contrôles et d'actionneurs 10.

Dans un ensemble d'étapes 301, les étapes suivantes sont mises en oeuvre, le module ODM 51 surveillant l'ensemble de conditions de fonctionnement nominal 52 (par exemple à une fréquence comprise dans la plage 0.1 à 1000 Hz) :
ITant que chacune des conditions de l'ensemble de ces conditions 52 est remplie, le système de contrôle de pilotage 20 opère dans un mode de fonctionnement nominal, où l'ODM 51 permet que les commandes de pilotage déterminées par le module de pilotage simplex 2, comme décrit ci-dessous relativement aux étapes 302, 303, soient effectivement fournies au système moteur 10.

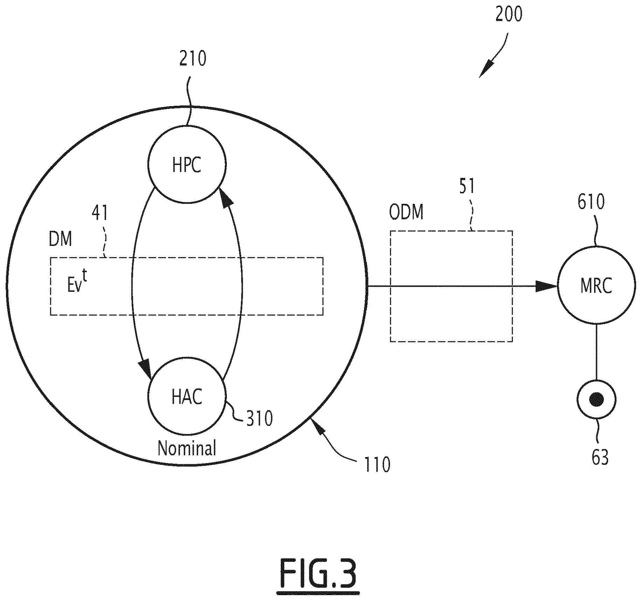

La figure 3 représente un diagramme de machine à états illustrant le fonctionnement du système de contrôle de pilotage 20. Le mode de fonctionnement nominal correspond à l'état 110.
► Dès que le module ODM 51 détecte dès que l'ensemble de conditions nominales 52 n'est plus vérifié (par exemple température extérieure trop froide, pas de données disponibles quant à la présence d'obstacles à proximité du robot-aéronef, pas de zone de poser prédéfinie dans le périmètre prescrit, panne matérielle grave, altitude hors plage autorisée ...), il déclenche le basculement du système de contrôle de pilotage 20 depuis le mode de fonctionnement nominal vers un mode de fonctionnement d'urgence : le module ODM 51 empêche dès lors la fourniture au dispositif de contrôles et d'actionneurs 10, des commandes courantes déterminées par le module de pilotage simplex 2, et commande la mise en oeuvre d'une procédure d'urgence par le module d'urgence EMRGCY 61, ainsi que décrit relativement l'étape 304 ci-dessous.

Le mode de fonctionnement d'urgence correspond à l'état 610 sur le diagramme de la machine à états représenté en figure 3.

Le mode de fonctionnement nominal est un mode de fonctionnement correspondant à l'architecture simplex du module de pilotage simplex 2.

Dans ce mode de fonctionnement nominal, chacun des contrôleurs de pilotage HPC 21 et HAC 31, en parallèle l'un de l'autre, détermine des commandes de pilotage du dispositif de contrôles et d'actionneurs 10, en fonction de données qui leur sont fournies par l'ensemble de capteurs embarqués à bord du robot-aéronef ou non) et en fonction de la mission du robot-aéronef 1. La fréquence de rafraîchissement de ces commandes est par exemple comprise dans la plage 0.1 à 1000Hz.

Dans ce mode de fonctionnement nominal, le module de décision 41, DM 41, lui, détermine, par exemple à une fréquence comprise dans la plage 0.1 à 1000 Hz, l'état courant du robot-aéronef 1, défini par le vecteur d'état courant comprenant les termes suivants relatifs au robot-aéronef 1 : sa vitesse courante, son accélération courante et la différence de cap courante. Le DM 41 compare l'état courant du robot-aéronef à l'ensemble d'état sûrs 40 :

Si l'état courant ne fait pas partie des états sûrs, dans une étape 303, le DM 41 choisit alors les commandes courantes de pilotage fournies par le contrôleur HAC 31 parmi les commandes courantes de pilotage fournies par le contrôleur HPC 21 et le contrôleur HAC 31, et commande la délivrance desdites commandes choisies en sortie du module de contrôle de pilotage simplex 2.

En mode de fonctionnement nominal, le dispositif de contrôles et d'actionneurs 10 exécute alors ces commandes (état 310 de la machine à état en figure 3).

Si l'état courant fait partie des états sûrs, dans une étape 302, le DM 41 choisit alors les commandes courantes de pilotage fournies par le contrôleur HPC 21 parmi les commandes courantes de pilotage fournies par le contrôleur HPC 21 et le contrôleur HAC 31, et commande la délivrance desdites commandes choisies en sortie du module de contrôle de pilotage simplex 2. En mode de fonctionnement nominal, le dispositif de contrôles et d'actionneurs 10 exécute alors ces commandes (état 210 de la machine à état en figure 3).

Le choix par le DM 41, par exemple, donne lieu au pilotage du commutateur 9 pour mettre en liaison la sortie du module de contrôle de pilotage simplex 2 et la sortie du HPC 21 lorsqu'un état sûr a été déterminé et alternativement pour mettre en liaison le HAC 21 et la sortie du module de contrôle de pilotage simplex 2 lorsqu'un état non sûr a été déterminé.

Ainsi dans le mode de fonctionnement nominal, dans les états sûrs, le pilotage est assuré par le HPC 21, le HAC reprenant le contrôle dès que le robot-aéronef a quitté l'ensemble des états sûrs et gardant ce contrôle jusqu'à ce que le robot-aéronef retrouve à nouveau un état sûr.

Dès que le fonctionnement est basculé en mode de fonctionnement d'urgence, dans une étape 304, le module d'urgence EMRGCY 61 fournit alors des commandes d'urgence au dispositif de contrôles et d'actionneurs 10 qui les exécutent (état 610 de la machine à états de la figure 3), permettant de placer le robot-aéronef dans un état de risque minimum 63 (MRC pour « Minimum Risk Condition » en anglais) : ces commandes d'urgence comprennent par exemple une commande d'atterrissage immédiat, ou une commande d'atterrissage sur la zone d'urgence la plus proche ...

Dans un mode de réalisation, le système de contrôle 20 est embarqué dans le robot-aéronef 1. On rappelle qu'un robot-aéronef est caractérisé par le fait qu'il est sans pilote humain, ni téléopérateur humain.

Dans des modes de réalisation, le HPC et/ou le DM ne sont pas embarqués, et sont au sol.

La solution selon l'invention décrite en référence aux figures 1-3 est par exemple dans un mode de réalisation mise en oeuvre par un robot-aéronef de type robot-hélicoptère, dans la phase d'atterrissage.

Dans le cadre de cette phase d'atterrissage, les blocs représentés en figure 3 sont adaptés pour exécuter les fonctions suivantes et générer les commandes de pilotage correspondantes :
- HPC 21 : identification de la zone d'atterrissage, génération du trajet d'approche, exécution et adaptation de la manoeuvre, génération des commandes correspondantes destinées au dispositif de contrôles et d'actionneurs 10 du robot-hélicoptère ;
- HAC 31 : maintien de l'hélicoptère dans l'enveloppe de vol (correspondant à l'ensemble des états sûrs 40, évitement d'obstacles, rebooter le HPC 21, navigation et atterrissage sur un terrain prédéfini, génération des commandes correspondantes destinées au dispositif de contrôles et d'actionneurs du robot-hélicoptère ;
- bloc DM 41 : détection de perte de contrôle, attitude, vitesse inusuelle pour un atterrissage, détection d'impact sur un terrain, détection d'un dysfonctionnement du contrôleur HPC 21, commutation entre le HPC 21 et le HAC 31 ;
- bloc ODM 51 : détection du bon fonctionnement des systèmes et des conditions définis de fonctionnement des capteurs (luminance, température...)
- bloc EMRGCY 61 : mise en oeuvre de procédures d'urgence pour répondre aux situations d'urgence et génération des commandes correspondantes destinées au dispositif de contrôles et d'actionneurs 10 du robot-hélicoptère ; de telles situations sont pour un robot-hélicoptère et plus généralement pour un robot-aéronef un moteur hors d'usage, un atterrissage dans l'eau, un feu, un problème hydraulique.

On notera que, en-dehors de la phase d'atterrissage, le vecteur d'état comprend en outre un paramètre relatif à une distance avec l'environnement (un état sûr correspond à une distance de garde minimale).

Les équipements mis en oeuvre par ces blocs pour assurer ces fonctions comportent par exemple :
- HPC 21 : large choix de capteurs (caméras, radars...) incluant ceux du HAC 31 et d'autres, fusion de données, bases de données, intelligence artificielle et apprentissage machine, haute connectivité et importantes ressources de calcul (en comparaison avec celles du HAC 31) ;
- HAC 31 : bloc certifié comprenant un navigateur de vol à la sécurité certifiée mais avec des performances réduites, capteurs de faible précision, manoeuvres d'évitement brutales ;
- bloc DM 41 : bloc certifié, nombre réduit de capteurs (« capteurs aéronautiques pour la localisation (type GADIRS comprenant des capteurs de localisation satellitaire (GPS, GNSS ...) et/ou baro-inertiels) pour surveillance de vitesse, accélération, attitude du robot-hélicoptère ; capteurs « fiables » pour détection d'obstacles, type LIDAR/RADAR par exemple, par exemple « détection de câble » à 600 pieds de l'aéronef 1, règles basiques de décision de commutation entre HPC 21 et HAC 31.

Dans un mode de réalisation, le système de contrôle 20 comprend un processeur 14 et une mémoire 15. La mémoire 15 comprend des instructions logicielles, qui lorsqu'elles sont exécutées sur le processeur 14, mettent en oeuvre automatiquement les étapes, décrites en référence à la figure 4, et incombant à un ou plusieurs des blocs parmi le système de contrôle 20, le module de pilotage simplex 2, le HPC 21, le HAC 31, le DM 41, l'ODM 51, l'EMRGCY 61.

Dans un autre mode de réalisation, un ou chacun de plusieurs de ces blocs est réalisé sous forme d'un composant logique programmable, tel qu'un FPGA (de l'anglais *Field Programmable Gate Array*)*,* ou encore sous forme d'un circuit intégré dédié, tel qu'un ASIC (de l'anglais *Applications Spécifie Integrated Circuit*)*.*

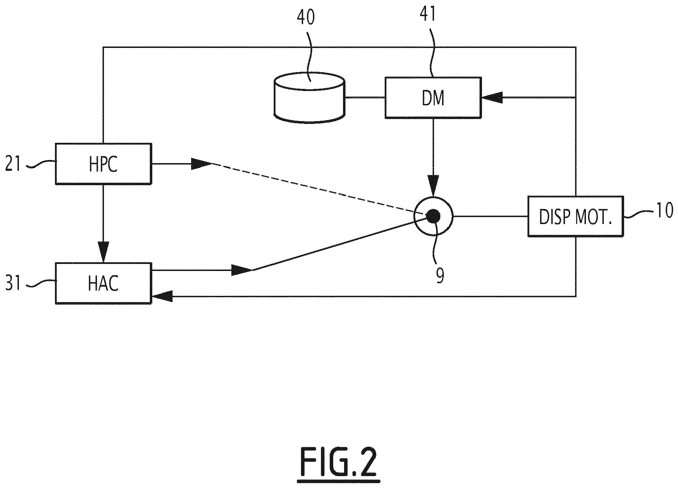

Dans un mode de réalisation, dans une étape préalable de conception, les étapes suivantes sont mises en oeuvre pour définir les fonctions de chaque bloc de la figure 2, telles que définies plus haut.

Ainsi pour les blocs DM 41 et HAC 31 :
a/ identification des événements redoutés (exemple : percuter un arbre) ;
b/ identification des conditions de reprise (reprise du HAC quand le HPC est au commande ; et vice-versa)(exemple : éviter l'arbre) ;
c/ identification des données observables (données relatives à l'ensemble des systèmes du robot-aéronef, aérodynamique, mission ) - et donc définition des capteurs - permettant la détection de ces événements ( exemple : pour observer un arbre, il faut un radar ou un Lidar, ou une caméra) ;
d/ définition des fonctionnalités « génériques » du contrôleur HAC 31 :les fonctions essentielles au maintien de l'aéronef dans un état sûr(exemple : maintenir l'aéronef à une distance de sécurité des arbres) ;

pour les blocs ODM 51 et EMRGCY 61 :
   e/ identification des événements redoutés ( i.e. qui font passer du fonctionnement nominal simplex vers un fonctionnement d'urgence) ;
   f/ évaluation FHA (Functional Hazard Analysis) , ce qui dépend des propriétés du contrôleur HAC 31 et du dispositif de contrôles et (es 10xemple : panne moteur) ;
   g/ identification des données observables (données relatives à l'ensemble des systèmes du robot-aéronef, et à son environnent externe - et donc définition des capteurs - permettant la détection de ces événements (exemple : alimentation du moteur) ;
   h/ définition des fonctions de secours,c'est-à-dire les manoeuvres qui vont mettre l'aéronef en condition de risque minimal étant donné son état et son environnement (ex mettre le robot-hélicoptère en autorotation si le robot-aéronef est de type robot-hélicoptère) ;
pour les blocs HPC 21 et HAC 31 :
   i / définition des fonctionnalités du bloc contrôleur HPC 21 (ex : contrôler le robot-aéronef avec une vitesse maximale pour diminuer le temps de trajet) ;
   j/ pour chacun des événements redoutés identifiés en al, définition des fonctionnalités spécifiques du contrôleur HAC 31 (ex pour l'événement redouté « éviter un arbre », définir la commande qui passant, d'un vol à vitesse rapide évite l'arbre de manière sûre : distance minimale, vitesse maximale).

Ces étapes permettent notamment de définir les fonctions des blocs décrits plus haut en considérant la phase d'atterrissage d'un robot-aéronef.

Le module de contrôle simplex 2 a été, dans un mode de réalisation, conçu en prenant en compte la contrainte de garantie de la sûreté de vol du robot-aéronef : par sûreté de vol, on entend la probabilité qu'un événement redouté amène à la mort des passagers du robot-aéronef ou la mort d'humains au sol ; la certification correspond à un engagement d'occurrence de ces événements redoutés. Par exemple, pour ce qui relève du HAC -et partiellement du DM - (le processus relatif au HPC sera davantage centré sur la bonne exécution de la mission), le processus suivant a été mis en oeuvre :
- Identification des événements redoutés (par exemple percuter le terrain, perdre une hélice ...) ;
- Identification d'une contre-mesure pour répondre à un tel événement (principe de mitigation) ;
- Construction d'un arbre de défaillance (arbre comprenant l'ensemble des événements sources amenant à l'événement redouté, avec probabilité d'occurrence pour chacun desdits événements sources, déterminant donc la probabilité d'occurrence de l'événement redouté) ;
- Allocation d'exigence (ie probabilité de défaillance attribuée aux différents modules fonction du niveau d'occurrences des événements redoutés sur lequel l'engagement de certification a été pris).

Selon l'invention, une machine est en charge de la sûreté à bord et garantit que le robot-aéronef reste dans une enveloppe d'états sûrs : il est garanti, selon l'invention, et ce de manière complètement autonome quant au pilotage automatique, que le vecteur d'état ne sortira pas de l'enveloppe des états sûrs.

Il a été décrit plus haut l'application de la solution à un robot-aéronef, notamment un robot-hélicoptère, mais l'invention peut bien sûr s'appliquer à tout type de véhicule autonome, sans pilote humain, ni téléopérateur humain : par exemple un robot-avion à voilure fixe, un drone, un robot-avion à décollage et atterrissage verticaux...

## Revendications

1. Procédé de contrôle d'un robot-aéronef (1) piloté par un système de contrôle entièrement autonome (20) comprenant un premier module de décision (51) et un module simplex de contrôle de pilotage (2) comprenant un contrôleur haute performance (21), un contrôleur haute sécurité (31) et un deuxième module de décision (41), les contrôleurs haute performance (21) et haute sécurité (31) déterminant chacun des commandes de pilotage du robot-aéronef (1),
selon lequel les étapes suivantes sont mises en oeuvre par le module simplex de contrôle de pilotage :
- un ensemble d'états sûrs (40) ayant été prédéfinis représentés chacun par un vecteur d'état comprenant un ensemble de paramètre(s) de valeur(s) prédéfinie(s) parmi un ensemble de paramètres caractérisant l' évolution latérale, verticale et/ou longitudinale du robot-aéronef, détermination par le deuxième module de décision (41) de l'état courant du robot-aéronef représenté par le vecteur d'état courant comprenant les valeurs courantes dudit ensemble de paramètre(s), relatives au robot-aéronef et détermination par le deuxième module de décision (41) de si ledit état courant déterminé est un état sûr compris dans l'ensemble des états sûrs ;
- dans le cas où il a déterminé que l'état courant est un état sûr, le deuxième module de décision (41) sélectionne alors les commandes courantes de pilotage fournies par le contrôleur haute performance (21) parmi celles fournies par le contrôleur haute performance (21) et le contrôleur haute sécurité (31), le module simplex de contrôle de pilotage (2) délivrant alors en sortie sélectivement lesdites commandes de pilotage sélectionnées pour exécution par le robot-aéronef ;
- dans le cas où il a déterminé que l'état courant n'est pas un état sûr, le deuxième module de décision (41) sélectionne alors les commandes courantes de pilotage fournies par le contrôleur haute sécurité (31) parmi celles fournies par le contrôleur haute performance (21) et le contrôleur haute sécurité (31) pour exécution par le robot-aéronef, le module simplex de contrôle de pilotage (2) délivrant alors en sortie sélectivement lesdites commandes de pilotage sélectionnées pour exécution par le robot-aéronef ;
ledit procédé étant **caractérisé en ce qu'**il comprend en outre les étapes suivantes :
- surveillance, par le premier module de décision (51), de ce qu'un ensemble de conditions (52) est bien vérifié ;
- tant que ledit ensemble de conditions est bien vérifié, mise en oeuvre par le premier module de décision (51) d'un premier mode de pilotage du robot-aéronef, dit mode nominal de pilotage, comprenant la fourniture en sortie du système de contrôle automatique (20) desdites commandes de pilotage délivrées en sortie du module simplex de contrôle de pilotage (2) ;
- dès que ledit ensemble de conditions n'est plus vérifié, basculement par le premier module de décision (51) du premier mode de pilotage vers un deuxième mode de pilotage, dit mode d'urgence de pilotage, dans lequel un ensemble de commandes d'urgence comprenant au moins une commande de pilotage est généré par un module d'urgence (61) en réponse audit basculement et ledit ensemble de commandes d'urgence est fourni en sortie du système de contrôle automatique (20) pour exécution par le robot-aéronef, le premier module de décision (51) empêchant la fourniture en sortie du système de contrôle automatique (20) des commandes de pilotage délivrées en sortie du module simplex de contrôle de pilotage (2).

2. Procédé de contrôle d'un robot-aéronef (1) selon la revendication 1, selon lequel le robot-aéronef exécute les commandes de pilotage fournies en sortie du système de contrôle (20).

3. Procédé de contrôle d'un robot-aéronef (1) selon la revendication 1 ou 2, selon lequel l'ensemble de conditions comporte une ou plusieurs des conditions parmi des conditions correspondant à un bon fonctionnement de capteurs embarqués dans le robot-aéronef, la disponibilité de données relatives à la zone courante survolée (bases de donnée de terrain, obstacles, zones de poser), la présence d'au moins une zone de poser prédéfinie à une distance maximum fixée, absence de pannes matérielles prédéfinies, une valeur courante de la vitesse et/ou de l'altitude dans une plage de valeurs prédéfinies.

4. Procédé de contrôle d'un robot-aéronef (1) selon l'une des revendications précédentes, selon lequel le robot-aéronef (1) est un robot-hélicoptère, robot-avion à voilure fixe, un drone, un robot-avion à décollage et atterrissage verticaux.

5. Procédé de contrôle d'un robot-aéronef (1) selon la revendication 4, selon lequel la répartition exclusive des fonctions entre le contrôleur haute performance (21) et le contrôleur haute sécurité (31) est la suivante :
le contrôleur haute performance (21) identifie la zone d'atterrissage et/ou génère le trajet d'approche, exécute et/ou adapte la manoeuvre d'approche, et génère des commandes correspondantes de pilotage du robot-aéronef ;
le contrôleur haute sécurité (31) maintient le robot-aéronef dans l'enveloppe de vol correspondant à l'ensemble des états sûrs (40) et/ou évite les obstacles et/pi reboote le contrôleur haute performance (21) et/ou navigue et atterrit sur un terrain prédéfini et génère des commandes correspondantes de pilotage du robot-aéronef.

6. Procédé de contrôle d'un robot-aéronef (1) selon l'une des revendications précédentes, selon lequel les paramètres d'évolution latérale, verticale, et/ou longitudinale comprennent des paramètres de type vitesse, accélération et/ou cap du robot-aéronef dans le plan respectivement latéral, verticale, et/ou longitudinal.

7. Système de contrôle (20) adapté pour piloter de manière entièrement autonome un robot-aéronef (1) comprenant un premier module de décision (51) et un module simplex de contrôle de pilotage (2) comprenant un contrôleur haute performance (21), un contrôleur haute sécurité (31) et un deuxième module de décision (41), les contrôleurs haute performance (21) et haute sécurité (31) étant adaptés chacun pour déterminer des commandes de pilotage du robot-aéronef (1), dans lequel :
- un ensemble d'états sûrs (40) ayant été prédéfinis représentés chacun par un vecteur d'état comprenant un ensemble de paramètre(s) de valeur(s) prédéfinie(s) parmi un ensemble de paramètres caractérisant l' évolution latérale, verticale et/ou longitudinale du robot-aéronef, le deuxième module de décision (41) est adapté pour déterminer l'état courant du robot-aéronef représenté par le vecteur d'état courant comprenant les valeurs courantes dudit ensemble de paramètre(s), relatives au robot-aéronef et pour déterminer si ledit état courant déterminé est un état sûr compris dans l'ensemble des états sûrs ;
- dans le cas où il a déterminé que l'état courant est un état sûr, le deuxième module de décision (41) est adapté pour sélectionner alors les commandes courantes de pilotage fournies par le contrôleur haute performance (21) parmi celles fournies par le contrôleur haute performance (21) et le contrôleur haute sécurité (31), le module simplex de contrôle de pilotage (2) est adapté pour délivrer alors en sortie sélectivement lesdites commandes de pilotage sélectionnées pour exécution par le robot-aéronef ;
- dans le cas où il a déterminé que l'état courant n'est pas un état sûr, le deuxième module de décision (41) est adapté pour sélectionner alors les commandes courantes de pilotage fournies par le contrôleur haute sécurité (31) parmi celles fournies par le contrôleur haute performance (21) et le contrôleur haute sécurité (31) pour exécution par le robot-aéronef, le module simplex de contrôle de pilotage (2) est adapté pour délivrer alors en sortie sélectivement lesdites commandes de pilotage sélectionnées pour exécution par le robot-aéronef ;
ledit système étant **caractérisé en ce que**:
- le premier module de décision (51) est adapté pour surveiller qu'un ensemble de conditions (52) est bien vérifié ;
- tant que ledit ensemble de conditions est bien vérifié, le premier module de décision (51) est adapté pour mettre en oeuvre un premier mode de pilotage du robot-aéronef, dit mode nominal de pilotage, comprenant la fourniture en sortie du système de contrôle automatique (20) desdites commandes de pilotage délivrées en sortie du module simplex de contrôle de pilotage (2) ;
- dès que ledit ensemble de conditions n'est plus vérifié, le premier module de décision (51) est adapté pour déclencher un basculement du premier mode de pilotage vers un deuxième mode de pilotage, dit mode d'urgence de pilotage, dans lequel un module d'urgence (61) est adapté pour générer un ensemble de commandes d'urgence comprenant au moins une commande de pilotage en réponse audit basculement, le système de contrôle automatique (20) étant adapté pour fournir en sortie ledit ensemble de commandes d'urgence pour exécution par le robot-aéronef, le premier module de décision (51) étant adapté pour empêcher la fourniture en sortie du système de contrôle automatique (20) des commandes de pilotage délivrées en sortie du module simplex de contrôle de pilotage (2).

8. Système de contrôle d'un robot-aéronef (1) selon la revendication 7, dans lequel l'ensemble de conditions comporte une ou plusieurs des conditions parmi des conditions correspondant à un bon fonctionnement de capteurs embarqués dans le robot-aéronef, la disponibilité de données relatives à la zone courante survolée (bases de donnée de terrain, obstacles, zones de poser), la présence d'au moins une zone de poser prédéfinie à une distance maximum fixée, absence de pannes matérielles prédéfinies, une valeur courante de la vitesse et/ou de l'altitude dans une plage de valeurs prédéfinies.

9. Système de contrôle d'un robot-aéronef (1) selon la revendication 7 ou 8, dans lequel les paramètres d'évolution latérale, verticale, et/ou longitudinale comprennent des paramètres de type vitesse, accélération et/ou cap du robot-aéronef dans le plan respectivement latéral, verticale, et/ou longitudinal.

10. Robot-aéronef (1) comprenant un système de contrôle selon l'une des revendications 7 à 9, adapté pour exécuter les commandes de pilotage fournies en sortie du système de contrôle (20).

## Patentansprüche

1. Verfahren zur Steuerung eines Roboterflugzeugs (1), das von einem vollständig autonomen Steuerungssystem (20) gesteuert wird, das ein erstes Entscheidungsmodul (51) und ein Simplex-Steuerungsmodul (2) mit einem Hochleistungs-Controller (21), einem Hochsicherheits-Controller (31) und ein zweites Entscheidungsmodul (41) umfasst, wobei der Hochleistungs-Controller (21) und der Hochsicherheits-Controller (31) jeweils Steuerungsbefehle für das Roboterflugzeug (1) bestimmen,
wobei die folgenden Schritte von dem Simplex-Steuerungsmodul ausgeführt werden:
- ein Satz vordefinierter sicherer Zustände (40), die jeweils durch einen Zustandsvektor dargestellt werden, der einen Satz Parameter mit vordefinierten Werten aus einem Satz von Parametern umfasst, die die laterale, vertikale und/oder longitudinale Entwicklung des Roboterflugzeugs charakterisieren, Bestimmen durch das zweite Entscheidungsmodul (41) bestimmt den Wert des aktuellen Zustands des Roboterflugzeugs, der durch den aktuellen Zustandsvektor dargestellt wird, der die aktuellen Werte des Satzes von Parametern umfasst, die sich auf das Roboterflugzeug beziehen, und Bestimmen durch das zweite Entscheidungsmodul (41), ob der bestimmte aktuelle Zustand ein sicherer Zustand ist, der in dem Satz von sicheren Zuständen enthalten ist;
- in dem Fall, dass es bestimmt hat, dass der aktuelle Zustand ein sicherer Zustand ist, wählt das zweite Entscheidungsmodul (41) dann die aktuellen Steuerbefehle, die von dem Hochleistungs-Controller (21) bereitgestellt werden, aus jenen aus, die von dem Hochleistungs-Controller (21) und von dem Hochsicherheits-Controller (31) bereitgestellt werden, wobei das Simplex-Steuerungsmodul (2) dann selektiv die ausgewählten Steuerungsbefehle zur Ausführung durch das Roboterflugzeug ausgibt;
- in dem Fall, dass es bestimmt hat, dass der aktuelle Zustand kein sicherer Zustand ist, wählt das zweite Entscheidungsmodul (41) dann die aktuellen Steuerbefehle, die von dem Hochsicherheits-Controller (31) bereitgestellt werden, aus jenen aus, die von dem Hochleistungs-Controller (21) und von dem Hochsicherheits-Controller (31) zur Ausführung durch das Roboterflugzeug bereitgestellt werden, wobei das Simplex-Steuerungsmodul (2) dann selektiv die ausgewählten Steuerungsbefehle zur Ausführung durch das Roboterflugzeug ausgibt;
wobei das Verfahren **dadurch gekennzeichnet ist, dass** es unter anderem die folgenden Schritte umfasst:
- Überwachen, durch das erste Entscheidungsmodul (51), ob ein Satz von Bedingungen (52) erfüllt ist;
- solange der Satz von Bedingungen erfüllt ist, implementiert das erste Entscheidungsmodul (51) einen ersten Steuerungsmodus des Roboterflugzeugs, den sogenannten nominalen Steuerungsmodus, einsetzt, der die Ausgabe der Steuerungsbefehle, die am Ausgang des Simplex-Steuerungsmoduls (2) ausgegeben werden, an das automatische Steuerungssystem (20) umfasst;
- sobald der Satz von Bedingungen nicht mehr erfüllt ist, Umschalten durch das erste Entscheidungsmodul (51) des ersten Steuerungsmodus in einen zweiten Steuerungsmodus, den sogenannten Steuerungsnotfallmodus, in dem ein Satz von Notfallbefehlen, der mindestens einen Steuerungsbefehl umfasst, durch ein Notfallmodul (61) als Reaktion auf das Umschalten erzeugt wird und der Satz von Notfallbefehlen am Ausgang des automatischen Steuerungssystems (20) zur Ausführung durch das Roboterflugzeug ausgegeben wird, wobei das erste Entscheidungsmodul (51) die Ausgabe von Steuerungsbefehlen, die von dem Simplex-Steuerungsmodul (2) ausgegeben werden, aus dem automatischen Steuerungssystem (20) verhindert.

2. Verfahren zum Steuern eines Roboterflugzeugs (1) nach Anspruch 1, wobei das Roboterflugzeug die Steuerungsbefehle ausführt, die von dem Steuerungssystem (20) ausgegeben werden.

3. Verfahren zur Steuerung eines Roboterflugzeugs (1) nach Anspruch 1 oder 2, wobei der Satz von Bedingungen eine oder mehrere der Bedingungen umfasst, die einer ordnungsgemäßen Funktion von Sensoren an Bord des Roboterflugzeugs entsprechen, der Verfügbarkeit von Daten in Bezug auf den aktuell überflogenen Bereich (Geländedatenbanken, Hindernisse, Landezonen), Vorhandensein mindestens einer vordefinierten Landezone in einer festgelegten maximalen Entfernung, Abwesenheit von vordefinierten Hardwareausfällen, ein aktueller Wert der Geschwindigkeit und/oder der Höhe innerhalb eines Bereichs von vordefinierten Werten.

4. Verfahren zum Steuern eines Roboterflugzeugs (1) nach einem der vorhergehenden Ansprüche, wobei das Roboterflugzeug (1) ein Hubschrauberroboter, ein Starrflügel-Roboterflugzeug, eine Drohne, ein vertikal startendes und landendes Roboterflugzeug ist.

5. Verfahren zur Steuerung eines Roboterflugzeugs (1) nach Anspruch 4, wobei die ausschließliche Funktionsverteilung zwischen dem Hochleistungs-Controller (21) und dem Hochsicherheits-Controller (31) wie folgt ist:
der Hochleistungs-Controller (21) identifiziert die Landezone und/oder generiert den Anflugweg, führt das Anflugmanöver durch und/oder passt es an und generiert entsprechende Befehle zur Steuerung des Roboterflugzeugs;
der Hochsicherheits-Controller (31) hält das Roboterflugzeug im Flugbereich, der dem Satz sicherer Zustände (40) entspricht, und/oder vermeidet Hindernisse und/oder startet den Hochleistungs-Controller (21) neu und/oder navigiert und landet auf einem vordefinierten Gelände und generiert entsprechende Befehle zum Steuern des Roboterflugzeugs.

6. Verfahren zum Steuern eines Roboterflugzeugs (1) nach einem der vorhergehenden Ansprüche, wobei die Parameter der lateralen, vertikalen und/oder longitudinalen Entwicklung Parameter von dem Typ Geschwindigkeit, Beschleunigung und/oder Kurs des Roboterflugzeugs in der lateralen, vertikalen und/oder longitudinalen Ebene umfassen.

7. Steuerungssystem (20), das dazu geeignet ist, ein Roboterflugzeug (1) vollständig autonom zu steuern, mit einem ersten Entscheidungsmodul (51) und einem Simplex-Steuerungsmodul (2), das einen Hochleistungs-Controller (21), einen Hochsicherheits-Controller (31) und ein zweites Entscheidungsmodul (41) umfasst, wobei der Hochleistungs-Controller (21) und der Hochsicherheits-Controller (31) sich jeweils dazu eignet, Steuerungsbefehle für das Roboterflugzeug (1) zu bestimmen, umfassend:
- einen Satz vordefinierter sicherer Zustände (40), die jeweils durch einen Zustandsvektor dargestellt werden, der einen Satz Parameter mit vordefinierten Werten aus einem Satz von Parametern umfasst, die die laterale, vertikale und/oder longitudinale Entwicklung des Roboterflugzeugs charakterisieren, das zweite Entscheidungsmodul (41) eignet sich dazu, den Wert des aktuellen Zustands des Roboterflugzeugs zu bestimmen, der durch den aktuellen Zustandsvektor dargestellt wird, der die aktuellen Werte des Satzes von Parametern umfasst, die sich auf das Roboterflugzeug beziehen und um zu bestimmen, ob der bestimmte aktuelle Zustand ein sicherer Zustand ist, der in dem Satz von sicheren Zuständen enthalten ist;
- in dem Fall, dass es bestimmt hat, dass der aktuelle Zustand ein sicherer Zustand ist, eignet sich das zweite Entscheidungsmodul (41), um dann die aktuellen Steuerbefehle, die von dem Hochleistungs-Controller (21) bereitgestellt werden, aus denjenigen auszuwählen, die von dem Hochleistungs-Controller (21) und dem Hochsicherheits-Controller (31) bereitgestellt werden, das Simplex-Steuerungsmodul (2) eignet sich dazu, die ausgewählten Steuerbefehle zur Ausführung durch das Roboterflugzeug selektiv auszugeben;
- in dem Fall, dass es bestimmt hat, dass der aktuelle Zustand kein sicherer Zustand ist, eignet sich das zweite Entscheidungsmodul (41), um dann die aktuellen Steuerbefehle, die von dem Hochsicherheits-Controller (31) bereitgestellt werden, aus denjenigen auszuwählen, die von dem Hochleistungs-Controller (21) und von dem Hochsicherheits-Controller (31) zur Ausführung durch das Roboterflugzeug bereitgestellt werden, wobei das Simplex-Steuerungsmodul (2) sich dazu eignet, um dann selektiv die ausgewählten Steuerungsbefehle zur Ausführung durch das Roboterflugzeug auszugeben;
wobei das System **dadurch gekennzeichnet ist, dass**:
- das erste Entscheidungsmodul (51) dazu geeignet ist, zu überwachen, dass ein Satz von Bedingungen (52) tatsächlich überprüft wird;
- solange der Satz von Bedingungen überprüft wird, das erste Entscheidungsmodul (51) sich eignet, um einen ersten Steuerungsmodus des Roboterflugzeugs, den sogenannten nominalen Steuerungsmodus, zu implementieren, der die Ausgabe der Steuerungsbefehle, die am Ausgang des Simplex-Steuerungsmoduls (2) ausgegeben werden, an das automatische Steuerungssystem (20) umfasst;
- sobald der Satz von Bedingungen nicht mehr überprüft wird, eignet sich das erste Entscheidungsmodul (51), um von dem ersten Steuerungsmodus in einen zweiten Steuerungsmodus, den sogenannten Steuerungsnotfallmodus umzuschalten, in dem ein Notfallmodul (61) sich dazu eignet, einen Satz von Notfallbefehlen, der mindestens einen Steuerungsbefehl umfasst, als Reaktion auf das Umschalten zu erzeugen, wobei das automatische Steuerungssystem (20) sich dazu eignet, den Satz von Notfallbefehlen am Ausgang zur Ausführung durch das Roboterflugzeug auszugeben, wobei das erste Entscheidungsmodul (51) sich dazu eignet, die Ausgabe von Steuerungsbefehlen, die von dem Simplex-Steuerungsmodul (2) ausgegeben werden, aus dem automatischen Steuerungssystem (20) zu verhindern.

8. Verfahren zur Steuerung eines Roboterflugzeugs (1) nach Anspruch 7, wobei der Satz von Bedingungen eine oder mehrere der Bedingungen umfasst, die einer ordnungsgemäßen Funktion von Sensoren an Bord des Roboterflugzeugs entsprechen, der Verfügbarkeit von Daten in Bezug auf den aktuell überflogenen Bereich (Geländedatenbanken, Hindernisse, Landezonen), Vorhandensein mindestens einer vordefinierten Landezone in einer festgelegten maximalen Entfernung, Abwesenheit von vordefinierten Hardwareausfällen, ein aktueller Wert der Geschwindigkeit und/oder der Höhe innerhalb eines Bereichs von vordefinierten Werten.

9. System zur Steuerung eines Roboterflugzeugs (1) nach Anspruch 7 oder 8, wobei die Parameter der lateralen, vertikalen und/oder longitudinalen Entwicklung Parameter von dem Typ Geschwindigkeit, Beschleunigung und/oder Kurs des Roboterflugzeugs in der lateralen, vertikalen und/oder longitudinalen Ebene umfassen.

10. Roboterflugzeug (1), umfassend ein Steuerungssystem nach einem der Ansprüche 7 bis 9, das sich dazu eignet, die von dem Steuerungssystem (20) bereitgestellten Steuerungsbefehle auszuführen.

## Claims

1. A method of controlling a robot aircraft (1) piloted by a fully autonomous control system (20) comprising a first decision module (51) and a simplex piloting control module (2) comprising a high performance controller (21), a high safety controller (31) and a second decision module (41), the high performance (21) and high safety (31) controllers each determining commands for piloting the robot aircraft (1),
according to which the following steps are implemented by the simplex control module:
- a set of safe states (40) which have been predefined, each represented by a state vector comprising a set of parameter(s) with predefined value(s) from among a set of parameters characterising the lateral, vertical and/or longitudinal evolution of the robot-aircraft, determination by the second decision module (41) of the current state of the robot-aircraft represented by the current state vector comprising the current values of the said set of parameter(s) relating to the robot-aircraft, and determination by the second decision module (41) of whether the said determined current state is a safe state included in the set of safe states;
- in the case where it has determined that the current state is a safe state, the second decision module (41) then selects the current steering commands provided by the high performance controller (21) from those provided by the high performance controller (21) and the high safety controller (31), the simplex piloting control module (2) then selectively outputting said selected steering commands for execution by the robot-aircraft;
- in the event that it has determined that the current state is not a safe state, the second decision module (41) then selects the current control commands supplied by the high-security controller (31) from those supplied by the high-performance controller (21) and the high-security controller (31) for execution by the robot-aircraft, the simplex piloting control module (2) then selectively outputting said selected steering commands for execution by the robot-aircraft;
said method being **characterised in that** it further comprises the following steps:
- monitoring, by the first decision module (51), that a set of conditions (52) has been verified;
- as long as the said set of conditions is verified, implementation by the first decision module (51) of a first mode of piloting the robot-aircraft, known as the nominal piloting mode, comprising the supply to the output of the automatic control system (20) of the said piloting commands delivered to the output of the simplex piloting control module (2);
- as soon as the said set of conditions is no longer verified, the first decision module (51) switches from the first control mode to a second control mode, known as the emergency control mode, in which a set of emergency commands comprising at least one piloting command is generated by an emergency module (61) in response to the said switchover and the said set of emergency commands is supplied at the output of the automatic control system (20) for execution by the robot-aircraft, the first decision module (51) preventing the piloting commands supplied at the output of the simplex piloting control module (2) from being supplied at the output of the automatic control system (20).

2. A method of controlling a robot-aircraft (1) according to claim 1, according to which the robot-aircraft executes the steering commands supplied at the output of the control system (20).

3. A method of controlling a robot-aircraft (1) according to claim 1 or 2, according to which the set of conditions comprises one or more of the conditions corresponding to the correct operation of sensors on-board the robot-aircraft, the availability of data relating to the current area overflown (terrain databases, obstacles, landing zones), the presence of at least one predefined landing zone at a fixed maximum distance, the absence of predefined hardware faults, a current value of speed and/or altitude within a range of predefined values.

4. A method of controlling a robot-aircraft (1) according to one of the preceding claims, according to which the robot-aircraft (1) is a robot-helicopter, a fixed-wing robot-aircraft, a drone or a vertical take-off and landing robot-aircraft.

5. A method of controlling a robot-aircraft (1) according to claim 4, according to which the exclusive distribution of functions between the high-performance controller (21) and the high-security controller (31) is as follows:
the high performance controller (21) identifies the landing zone and/or generates the approach path, executes and/or adapts the approach manoeuvre, and generates corresponding commands for piloting the robot-aircraft;
the high-performance controller (31) keeps the robot-aircraft in the flight envelope corresponding to the set of safe states (40) and/or avoids obstacles and/or reboots the high-performance controller (21) and/or navigates and lands on a predefined terrain and generates corresponding commands for piloting the robot-aircraft.

6. A method of controlling a robot-aircraft (1) according to one of the preceding claims, according to which the lateral, vertical and/or longitudinal evolution parameters comprise parameters of the speed, acceleration and/or heading type of the robot-aircraft in the lateral, vertical and/or longitudinal plane respectively.

7. A control system (20) adapted to fully autonomously pilot a robot aircraft (1) comprising a first decision module (51) and a simplex piloting control module (2) comprising a high performance controller (21), a high safety controller (31) and a second decision module (41), the high-performance (21) and high-security (31) controllers each being adapted to determine commands for piloting the robot-aircraft (1), in which:
- a set of safe states (40) that have been predefined, each represented by a state vector comprising a set of parameter(s) with predefined value(s) from among a set of parameters characterising the lateral, vertical and/or longitudinal evolution of the robot-aircraft, the second decision module (41) is adapted to determine the current state of the robot-aircraft represented by the current state vector comprising the current values of said set of parameter(s) relating to the robot-aircraft and to determine whether said determined current state is a safe state included in the set of safe states;
- in the case where it has determined that the current state is a safe state, the second decision module (41) is adapted to then select the current control commands provided by the high performance controller (21) from those provided by the high performance controller (21) and the high safety controller (31), the simplex piloting control module (2) is adapted to then selectively output said selected control commands for execution by the robot-aircraft;
- in the event that it has determined that the current state is not a safe state, the second decision module (41) is adapted to then select the current piloting commands supplied by the high safety controller (31) from those supplied by the high performance controller (21) and the high safety controller (31) for execution by the robot-aircraft, the simplex piloting control module (2) is adapted to then selectively output said selected steering commands for execution by the robot-aircraft;
said system being **characterised in that**:
- the first decision module (51) is adapted to monitor that a set of conditions (52) is verified;
- as long as the said set of conditions is verified, the first decision module (51) is adapted to implement a first mode of piloting the robot-aircraft, known as the nominal piloting mode, comprising the supply to the output of the automatic control system (20) of the said piloting commands delivered at the output of the simplex piloting control module (2);
- as soon as the said set of conditions is no longer verified, the first decision module (51) is adapted to trigger a switchover from the first control mode to a second control mode, referred to as an emergency control mode, in which an emergency module (61) is adapted to generate a set of emergency commands comprising at least one control command in response to the said switchover, the automatic control system (20) being adapted to output said set of emergency commands for execution by the robot-aircraft, the first decision module (51) being adapted to prevent the output of the automatic control system (20) from the steering commands output from the simplex piloting control module (2).

8. A system for controlling a robot-aircraft (1) according to claim 7, in which the set of conditions comprises one or more of the conditions corresponding to correct operation of sensors on-board the robot-aircraft, the availability of data relating to the current area overflown (terrain databases, obstacles, landing zones), the presence of at least one predefined landing zone at a fixed maximum distance, the absence of predefined hardware faults, a current value of speed and/or altitude within a range of predefined values.

9. A system for controlling a robot-aircraft (1) according to claim 7 or 8, in which the lateral, vertical and/or longitudinal evolution parameters comprise parameters of the speed, acceleration and/or heading type of the robot-aircraft in the lateral, vertical and/or longitudinal plane respectively.

10. Robot aircraft (1) comprising a control system according to one of claims 7 to 9, adapted to execute the piloting commands provided at the output of the control system (20).
